**Europäisches Patentamt**

**European Patent Office**

**Office européen des brevets**

(11) Numéro de publication: **0 166 632**
**B1**

(12) **FASCICULE DE BREVET EUROPEEN**

(45) Date de publication du fascicule du brevet:
**05.10.88**

(21) Numéro de dépôt: **85400964.4**

(22) Date de dépôt: **15.05.85**

(51) Int. Cl.⁴: **D 06 M 17/00,** C 09 J 3/12,
C 08 L 21/02

(54) **Composition amylacée pour mélanges à base de liants synthéthiques ou naturels mis en oeuvre dans la fabrication de certains produits textiles, paratextiles et notamment du type composites textiles.**

(30) Priorité: **17.05.84 FR 8407668**

(43) Date de publication de la demande:
**02.01.86 Bulletin 86/1**

(45) Mention de la délivrance du brevet:
**05.10.88 Bulletin 88/40**

(84) Etats contractants désignés:
**AT BE CH DE GB IT LI NL SE**

(56) Documents cités:
**FR - A - 2 332 130**
**FR - A - 2 372 205**
**GB - A - 166 731**
**GB - A - 706 259**
**US - A - 3 632 535**
**US - A - 4 055 694**

(73) Titulaire: **Roquette Frères, F-62136 Lestrem (FR)**

(72) Inventeur: **Gosset, Serge, 393, Chemin du Paradis,**
**F-62136 Lestrem (FR)**
Inventeur: **Lumaret, Jean-Claude, 96, Place Lamartine,**
**F-62400 Bethune (FR)**

(74) Mandataire: **Koch, Gustave et al, Cabinet**
**PLASSERAUD 84, rue d'Amsterdam, F-75009 Paris (FR)**

## Description

L'invention a pour objet une composition amylacée pour mélanges à base de liants synthétiques ou naturels mis en œuvre dans la fabrication de certains produits textiles, paratextiles et notamment du type composites textiles.

Les mélanges an question sont généralement désignés dans la technique et ci-après par le terme «compound». De même, les liants synthétiques ou naturels, qui représentent le constituant essentiel et, dans certains cas, unique des compounds, sont désignés par le terme «latex»; ils se présentent sous la forme de dispersions aqueuses de polymères synthétiques ou de caoutchouc naturel.

Les mélanges à base de liants synthétiques ou naturels en question trouvent des applications nombreuses dans les procédés en eux-mêmes connus de fabrication des produits textiles, paratextiles et notamment du type composites textiles et dont certaines étapes constituent des opérations de collage, notamment au moment de l'assemblage des parties constitutives des composites textiles tels que tapis, tapis tuftés ou aiguilletés et autres du type comportant un «dos» en mousse ou encore en textile qui constitue un doublage secondaire, l'ensemble étant généralement désigné par le terme «double dossier», lorsque le «dos» est en matière textile.

La viscosité des compounds doit être telle qu'ils pénètrent juste suffisamment dans la matière textile pour donner l'adhérence souhaitée entre les parties constitutives du produit.

Outre le ou les polymères synthétiques et/ou le caoutchouc naturel, les compounds comprennent généralement des charges notamment minérales conférant aux produits textiles terminés des propriétés d'ignifugation, de rigidité, de couleur et autres. Ils peuvent également contenir, entre autres, un ou plusieurs des constituants suivants:

– anti-oxydants
– produits antimousse
– plastifiants
– épaississants
– agents de vulcanisation
– émulsionnants
– dispersants.

Pour être concurrentiels, les produits textiles ainsi fabriqués avec mise en œuvre de compounds à base de liants synthétiques ou naturels ou latex doivent répondre notamment à des critères de solidité qui, par exemple dans le cas des tapis du type «double dossier», se traduisent par une résistance suffisante à la séparation des parties constitutives du tapis.

Il a déjà été proposé, dans le but d'en améliorer les propriétés de viscosité et/ou le pouvoir cohésif, de faire entrer dans la composition des susdits compounds divers agents épaississants dont certains sont des produits amylacés constitués:

– soit d'amidons prégélatinisés,
– soit d'emplois gélatinisés,
– soit d'amidons sous forme granulaire, non solubles dans l'eau froide, éventuellement modifiés au préalable par voie chimique et éventuellement mis en œuvre en présence de certains agents chimiques capables d'en abaisser la température de gélatinisation.

A cet égard, il est possible de citer FR-A 2 332 130.

Aucune des solutions ainsi proposées n'a conduit à des résultats satisfaisants sur tous les plans.

C'est ainsi que l'utilisation d'amidons prégélatinisés ou d'emplois d'aidon conduit à l'obtention de compositions liantes présentant des viscosités excessives, incompatibles avec les conditions de marche sur machine.

L'utilisation d'amidons granulaires peut entrainer, quant à elle, des problèmes de décantation, en particulier dans le domaine des tapis aiguilletés plein bain.

D'autre part, le pouvoir d'adhérence instantanée est inexistant et le pouvoir cohésif en sortie de séchérie peut être jugé insuffisant.

Or, la Société Demanderesse a eu le mérite de mettre au point une composition amylacée qui permet, lorsqu'elle remplace dans la formulation d'un compound du genre en question une proportion d'environ 5 à 30% du liant naturel ou synthétique sec, d'accroitre de façon décisive la cohésion des produits textiles fabriqués à l'aide de ces compounds.

Du fait de cette augmentation déterminante de la cohésion, la proportion de charges peut être augmentée dans la formulation finale tout en conservant une résistance encore satisfaisante.

Cette augmentation du taux de charges ainsi que la substitution d'une partie des latex par la composition amylacée selon l'invention se traduisent par une diminution très sensible du prix de revient du produit textile terminé.

En plus des avantages qui viennent d'être indiqués, le recours à la composition amylacée conforme à l'invention confère au compound correspondant un pouvoir de collage instantané remarquable permettant d'éviter le déplacement les unes par rapport aux autres des parties constitutives du produit textile dans la fabrication duquel est utilisé le compound au cours des manipulations précédant le passage en séchérie.

Ceci étant, la composition amylacée en question, qui se présente avantageusement sous la forme d'un mélange pulvérulent ou d'une pâte (en général à moins de 35% d'eau), comprend conformément à l'invention:

– de 7 à 45% en poids, de préférence de 10 à 25% en poids d'un amidon gonflant dans l'eau froide éventuellement modifié par voie chimique,
– de 55 à 93% en poids, de préférence de 70 à 85% en poids d'amidon granulaire modifié par voie chimique, de préférence par oxydation.

Avantageusement, on ajoute à la susdite composition de 0,2 à 4%, de préférence de 0,5 à 2,5% en poids d'au moins un agent alcalin propre à abaisser la température de gélatinisation de l'amidon granulaire, ces pourcentages étant exprimés en équivalents OH- par rapport à l'amidon total de la composition.

Selon un mode de réalisation avantageaux de l'invention, on ajoute à la susdite composition amylacée, de 0,1 à 10% et, de préférence, de 0,2 à 5% en poids de borax, cette introduction de borax permettant d'améliorer le pouvoir cohésif.

La composition selon l'invention peut également comprendre des agents plastifiants tels que l'urée et le nitrate de sodium et des agents désaérants tels que ceux connus sous les marques ALBEGAL et IRGAPADOL FFU commercialisés par CIBA GEIGY.

L'invention vise également les mélanges à base de liants synthétiques ou naturels mis en œuvre dans la fabrication notamment des produits textiles, en particulier du type composite dans lesquels une proportion d'environ 5 à 30% en poids du liant sec est remplacée par une quantité équivalente de la composition amylacée conforme à l'invention.

Elle vise enfin un procédé de préparation de produits textiles, notamment du type composite, comportant la mise en œuvre d'un mélange à base de liants synthétiques ou naturels dans lequel une proportion d'environ 5 à environ 30% du liant sec est remplacée par une quantité équivalente de la composition amylacée conforme à l'invention ou par ses constituants introduits isolément.

L'amidon gonflant dans l'eau froide entrant dans la constitution de la composition conforme à l'invention peut être obtenu par traitement de modification physique du genre gélatinisation sur tambour ou, de préférence, par cuisson-extrusion, à partir d'amidons natifs ou modifiés de toute origine comprenant les amidons naturels ou hybrides de pomme de terre, manioc, maïs, maïs cireux, maïs à haute teneur en amylose, blé, riz et autres. Il peut également être obtenue par une modification chimique de l'amidon, telle que l'estérification ou l'éthérification, cette modification étant suffisante pour rendre l'amidon gonflant dans l'eau à température ambiante.

Ce sont ces mêmes amidons natifs de toute provenance qui sont utilisés sous forme granulaire dans la composition conforme à l'invention après avoir été soumis à un traitement de modification chimique consistant, de préférence, en une oxydation mais pouvant également être constitué par une estérification, une éthérification, une réticulation ou une fluidification acide ou enzymatique, ou une combinaison de ces traitements.

Les agents propres à abaisser la température de gélatinisation de l'amidon granulaire, ou sensibilisateurs, et qui sont ajoutés préférentiellement à la composition conforme à l'invention, peuvent être choisis dans le groupe comprenant en particulier la soude, la potasse, l'urée, le carbonate de soude et la chaux ainsi que leurs mélanges.

L'invention pourra être encore mieux comprise grâce aux exemples comparatifs qui suivent et dans lesquels sont exposés des modes de réalisation avantageux.

Exemple 1

Dans cet exemple, on compare les valeurs de la cohésivité, mesurées à l'aide de l'appareil INSTRON modèle 1122 et exprimés en Newton (N), dans le cas de la fabrication d'un produit textile stratifié composite du type «double dossier» (formé par un tapis du type «tufté» et d'un «dossier» en polypropylène) à l'aide de trois formulations à base de liants synthétiques selon l'art antérieur et de deux formulations comportant une composition amylacée conforme à l'invention.

La fabrication du «double dossier» a été réalisée selon les phases opératoires suivantes:

- Préparation de la formulation à base de latex
- Application à la râcle du compound ainsi obtenu au dos du tapis
- Contrecollage du «dossier»
- Calandrage
- Séchage en four ventilé
- Conditionnement du produit fini, c'est-à-dire du «double dossier».

On prépare ensuite, à partir du «double dossier» ainsi réalisé, les éprouvettes, soumises à la mesure de la cohésivité, en découpant des bandelettes de 5 cm de large.

La concentration en matières sèches des susdites formulations à base de latex requise pour la fabrication de ces «double dossiers» est de 75%.

Les quantités de compound mises en œuvre sont de 1000 g de produit commercial par m² de «double dossier». La durée de séchage est arbitrairement fixée à 15 minutes pour une température de 150°C.

Les trois formulations à base de latex ou compound selon l'art antérieur sont constituées comme suit:

Formulation A
C'est un mélange sans produit amylacé. On mélange à la température ambiante:

- 100 parties en poids (exprimées sur la matière sèche) de liant synthétique se présentant sous la forme d'une dispersion aqueuse à 50% de matières sèches, connu sous la marque «Latex Dow Chemical XDS 841 806»,
- 2 parties en poids de tripolyphosphate de sodium ou TSPP à titre de dispersant,
- 400 parties en poids de charge minérale constituée par du CaCO₃.

On ajoute une quantité suffisante d'eau pour amener la teneur en matières sèches de la formulation à 75%.

On amène enfin la viscosité de ce mélange à 10 Pa.s (mesurée sur l'appareil Brookfield type RVF,

broche n° 5, 20 t/min.) en ajoutant la quantité nécessaire de polyacrylate de sodium à 12,5% de matière active (par exemple celui commercialisé par la Société Protex sous l'appellation «ACRYLRON A 300»).

Formulation B C'est un mélange comportant, en tant que produit amylacé, un amidon extrudé.

Dans ce mélange, l'amidon extrudé doit remplacer environ 20 parties du liant synthétique sec de la formulation A.

Pour le préparer, on a mélangé
– 80 parties en poids (en sec) du liant synthétique utilisé pour la formulation A,
– environ 20 parties en poids d'un amidon de mais extrudé (obtenu sur une extrudeuse double vis de la marque Creusot-Loire et caractérisé, d'une part, par une viscosité de 0,05 Pa.s à 5% de matières sèches et, d'autre part, par un taux de matières solubles d'environ 50% dans l'eau à température ambiante, cet amidon extrudé étant essentiellement non-biréfringent) auquel on ajoute une quantité de borax correspondant à 1,3% en poids de la quantité totale d'amylacé présent,
– 2 parties en poids de TSPP.

On a essayé d'introduire 400 parties en poids de la même charge minérale que celle utilisée pour préparer la formulation A; cette introduction a été impossible du fait de la forte viscosité développée par l'amidon extrudé; pour pallier cet inconvénient, il aurait fallu ajouter une quantité d'eau telle qu'il n'aurait pas été possible de respecter les 75% de matières sèches requises.

Il n'a donc pas été possible de préparer cette formulation.

Formulation C

C'est un mélange comportant, en tant que produit amylacé, de la fécule de pomme de terre native granulaire; le mélange comporte en outre un mélange propre à abaisser le point de gélatinisation de la fécule.

La formulation C est préparée à partir de:
– 80 parties en poids (sur sec) du liant synthétique utilisé pour la formulation A
– 19 parties en poids d'une fécule de pomme de terre native à laquelle on ajoute en plus 1,36% en poids, par rapport à la quantité totale d'amylacé, de borax et 3,9% en poids d'un mélange équimoléculaire de chaux et de carbonate de sodium,
– 2 parties en poids de TSPP,
– 400 parties en poids de la charge minérale prévue pour la formulation A,
– quantités suffisantes d'eau pour amener la teneur en matières sèches à 75% et de polyacrylate de la marque «ACRYLRON A 300» pour obtenir une viscosité de 10 Pa.s.

Formulation D

C'est un mélange comportant, en tant que produit amylacé, une composition conforme à l'invention constituée de:

– 79,8% en poids d'une fécule modifiée par acétylation et par fluidification présentant un indice d'acétyle de 1,5,
– 20,2% en poids de l'amidon de mais extrudé, utilisé dans la formulation B.

Ce mélange d'amylacés est présent à raison de 18,8 parties en poids, alors que le liant synthétique (identique à celui de la formulation A) est toujours présent à raison de 80 parties en poids.

Le mélange d'amylacés précédemment défini est additionné d'une quantité de borax correspondant à 1,63% en poids de la quantité totale d'amylacé présent et d'une quantité, égale à 4,37% en poids par rapport à la quantité totale d'amylacé, de la composition équimoléculaire de chaux et de carbonate de sodium identifiée à la formulation C.

En outre, la formulation en question comprend deux parties en poids de TSPP et 400 parties en poids de la charge minérale utilisée pour la formulation A.

Enfin, on ajoute la quantité d'eau suffisante pour obtenir une teneur en matières sèches de la formulation égale à 75% et la quantité nécessaire du polyacrylate de la marque «ACRYLRON A 300» pour amener la viscosité de la formulation terminée à 10 Pa.s.

Formulation E

C'est un mélange comportant, en tant que produit amylacé, une composition conforme à l'invention constituée de:

– 79,8% en poids de fécule de pomme de terre modifiée par oxydation de façon telle que, pour un taux de matières sèches de 10%, après cuisson à la vapeur vive pendant 5 minutes à 90°C, l'amylacé apporte dans l'eau une viscosité de 0,02 Pa.s à 50°C.
– 20,2% en poids de l'amidon de mais extrudé de la formulation D.

Le mélange d'amylacés est présent à raison de 18,8 parties en poids alors que le liant synthétique (identique à celui de la formulation A) est toujours présent à raison de 80 parties en poids.

Le mélange d'amylacés précédemment défini est additionné des mêmes quantités (que dans la formulation D) de borax et du mélange équimoléculaire de chaux et de carbonate de sodium.

De plus, la formulation en question comprend 2 parties en poids de TSPP et 400 parties en poids de la charge minérale utilisée pour la formulation A.

Enfin, la formulation est amenée à 75% de matières sèches et à 10 Pa.s suivant le même mode opératoire que précédemment utilisé.

A l'aide des quatre formulations ainsi établies (on rappelle qu'il n'a pas été possible de terminer la formulation B), on fabrique autant d'échantil-

lons de «double dossier» en procédant comme indiqué plus haut.

Par ailleurs, en ayant recours à des mesures de viscosité effectuées (d'une part, au moment de la fabrication, d'autre part, après 24 heures sans agitation et, d'autre part encore, après 24 heures sans agitation suivies de 5 minutes d'agitation) de la manière indiquée plus haut à propos de la formulation A, on montre que le remplacement d'environ 20 parties en poids du liant synthétique par la composition conforme à l'invention n'entraine aucune perturbation de la stabilité de la formulation.

De plus, on remarque que le remplacement d'une partie du liant par la composition conforme à l'invention, fait que la quantité de polyacrylate de sodium à ajouter à la formulation est moindre.

Les valeurs relevées lors des mesures de la cohésivité effectuées sur les quatre échantillons de «double dossier» ainsi préparés, sont réunies dans le tableau I.

### Tableau I

| Formulation | A | C | D | E |
|---|---|---|---|---|
| Cohésivité (en N) | 25 | 18 | 46 | 64 |

L'examen de ces valeurs fait apparaitre indiscutablement l'avantage procuré par l'utilisation de la composition conforme à l'invention.

### Exemple 2

Cet exemple comparatif met en évidence la cohésivité supérieure que présente une formulation conforme à l'invention (formulation E), par rapport à une formulation F, identique à la formulation E, à la différence près que cette formulation F comporte une fécule native en remplacement de la fécule oxydée constitutive de la partie granulaire du mélange d'amylacés.

La formulation F est donc constituée pour sa partie amylacée d'une composition contenant:

- 79,8% en poids d'une fécule native,
- 20,2% en poids de l'amidon de mais extrudé de la formulation E.

Les valeurs obtenues au cours des mesures de cohésivité effectuées sur les échantillons réalisés à partir des formulations E et F sont présentées dans le tableau II.

### Tableau II

| Formulation | E | F |
|---|---|---|
| Cohésivité (en N) | 64 | 30 |

La comparaison de ces deux valeurs fait nettement apparaitre l'intérêt apporté par le choix, pour la partie granulaire, d'une fécule modifiée à la place d'une fécule native.

### Exemple 3

Cet exemple comparatif montre que, du fait de la cohésivité accrue conférée au compound grâce à la composition conforme à l'invention, il est possible d'accroitre la proportion de charge minérale dans la formulation finale du compound tout en conservant une cohésivité suffisante.

On prépare trois échantillons de «double dossier» de la manière indiquée plus haut en utilisant successivement:

- la formulation A de l'exemple 1,
- une formulation G identique à la formulation A à la différence près qu'au lieu de 400 parties en poids de charge minérale, on en introduit 500 parties en poids,
- une formulation H identique à la formulation D de l'exemple 1 à la différence près qu'au lieu de 400 parties en poids de charge minérale, on a introduit 500 parties en poids de cette charge.

On effectue les mesures de la cohésivité comme à l'exemple 1.

Les valeurs enregistrées sont réunies dans le tableau III.

### Tableau III

| Formulation | A | G | H |
|---|---|---|---|
| Cohésivité (en N) | 25 | 21 | 38 |

On constate que la cohésivité est encore très satisfaisante avec la formulation H grâce à laquelle on applique moins de liant synthétique, produit onéreux, au mètre carré de «double dossier».

### Exemple 4

Dans cet exemple, on compare les valeurs de la cohésivité, mesurées à l'aide de l'appareil LHO-MARGY-DYNAMOMETRE, exprimées en g pour 5 cm, dans le cas de l'application d'une sous-couche «mousse» au dos d'un tapis aiguilleté, à l'aide de deux formulations à base de liants synthétiques, l'une selon l'art antérieur, l'autre comportant une composition conforme à l'invention.

La fabrication de ce type de moquette est réalisée selon les phases opératoires suivantes:

Préparation de l'aiguilleté
- formation de la nappe de fibre
- formation du voile: passage de la nappe dans une carde
- aiguilletage du voile
- immersion du voile aiguilleté dans un bain de latex
- séchage en four ventilé
Application d'un dossier «mousse»
- Préparation de la formulation à base de latex.

La concentration en matières sèches requise pour la fabrication de ces dossiers «mousse» est de 75%.

– Application à la racle du compound moussé au dos du tapis aiguilleté. Les quantités de compound mises en œuvre sont de 600 g de produit commercial par m² de tapis aiguilleté.
– Séchage infrarouge.
– Séchage en four ventilé à 150°C pendant 5 minutes.
– Conditionnement du produit fini.

On prépare ensuite à partir du tapis ainsi réalisé, les éprouvettes soumises à la mesure de la cohésivité, en découpant des bandelettes de 5 cm de large et de 18 cm de long.

| Formulation (sec) | I | J |
|---|---|---|
| Latex | 90 | 90 |
| Amylacé | 10 (type F) | 10 (type E) |
| Savon | 3 | 3 |
| Lauryl sulfate | 1 | 1 |
| Dispersant | 1 | 1 |
| Calgon | 2 | 2 |
| Vulcanisant | 5,5 | 5,5 |
| Charge | 170 | 170 |
| Eau | qsp | qsp |
| Viscosité Brookfield RVT 10 trs (Pa.s) | 2,5 | 2,2 |
| Délamination (g/5 cm) N/5 cm | (590) 5,8 | (630) 6,2 |

L'examen de ces valeurs fait apparaitre l'avantage procuré par l'utilisation de la composition conforme à l'invention dans la fabrication d'un dossier «mousse».

## Revendications

1. Composition amylacée pour mélanges à base de liants synthétiques ou naturels mis en œuvre dans la fabrication de certains produits textiles, paratextiles et notamment du type composites textiles, caractérisée par le fait qu'elle comprend:

– de 7 à 45% en poids, de préférence de 10 à 25% en poids d'un amidon gonflant dans l'eau froide éventuellement modifié par voie chimique,
– de 55 à 93% en poids, de préférence de 70 à 85% en poids d'amidon granulaire modifié par voie chimique.

2. Composition selon la revendication 1, caractérisée par le fait qu'on lui ajoute de 0,2 à 4%, de préférence de 0,5 à 2,5% en poids, exprimés en équivalents OH⁻ par rapport à l'amidon total de la composition, d'au moins un agent alcalin propre à abaisser la température de gélatinisation de l'amidon granulaire.

3. Composition selon l'une des revendications 1 et 2, caractérisée par le fait qu'on lui ajoute de 0,1 à 10%, de préférence de 0,2 à 5% en poids de borax.

4. Composition selon l'une des revendications 1 à 3, caractérisée par le fait qu'elle comprend de l'amidon granulaire modifié par oxydation.

5. Mélanges à base de liants synthétiques ou naturels mis en œuvre dans la fabrication de certains produits textiles, notamment du type composites textiles, caractérisé par le fait qu'une proportion d'environ 5 à 30% en poids du liant sec est remplacée par une quentité équivalente de la composition amylacée selon l'une des revendications 1 à 4.

6. Procédé de préparation de produits textiles, paratextiles et notamment du type composites textiles, caractérisé par le fait qu'il comporte la mise en œuvre d'un mélange à base de liants synthétiques ou naturels dans lequel une proportion d'environ 5 à environ 30% du liant sec est remplacée par une quantité équivalente d'une composition selon l'une des revendications 1 à 4 ou par les constituants de cette composition introduits isolément.

## Patentansprüche

1. Stärkehaltige Zusammensetzung für Mischungen auf der Basis von synthetischen oder natürlichen Bindemitteln, welche Mischungen bei der Erzeugung von bestimmten Textilprodukten, textilähnlichen Produkten und insbesondere von Produkten vom Typus textiler Verbundprodukte eingesetzt werden, dadurch gekennzeichnet, dass sie enthält:

– 7 bis 45 Gew.%, vorzugsweise 10 bis 25 Gew.%, einer in kaltem Wasser quellbaren und gegebenenfalls auf chemischem Wege modifizierten Stärke,
– 55 bis 93 Gew.%, vorzugsweise 70 bis 85 Gew.%, einer auf chemischem Wege modifizierten körnigen Stärke.

2. Zusammensetzung nach Anspruch 1, dadurch gekennzeichnet, dass man derselben 0,2 bis 4 Gew.%, vorzugsweise 0,5 bis 2,5 Gew.%, ausgedrückt als Äquivalente an OH-Gruppen, bezogen auf die Gesamtstärke der Zusammensetzung, an wenigstens einem alkalischen Mittel zusetzt, welches geeignet ist, die Gelatinisierungstemperatur der körnigen Stärke herabzusetzen.

3. Zusammensetzung nach einem der Ansprüche 1 und 2, dadurch gekennzeichnet, dass man derselben 0,1 bis 10 Gew.%, vorzugsweise 0,2 bis 5 Gew.%, an Borax zusetzt.

4. Zusammensetzung nach einem der Ansprüche 1 bis 3, dadurch gekennzeichnet, dass sie durch Oxidation modifizierte körnige Stärke enthält.

5. Mischungen auf der Basis von synthetischen oder natürlichen Bindemitteln, welche Mischungen bei der Erzeugung von bestimmten Textilprodukten, insbesondere solchen vom Typus textiler Verbundprodukte, eingesetzt werden, dadurch gekennzeichnet, dass darin ein Anteil von etwa 5 bis 30 Gew.% des trockenen Bindemittels durch eine äquivalente Menge der stärkehaltigen Zusammensetzung nach einem der Ansprüche 1 bis 4 ersetzt ist.

6. Verfahren zur Herstellung von Textilprodukten, textilähnlichen Produkten und insbesondere von Produkten vom Typus textiler Verbundprodukte, dadurch gekennzeichnet, dass es den Einsatz eines Gemisches auf der Basis von synthetischen oder natürlichen Bindemitteln umfasst, in welchem Gemisch ein Anteil von etwa 5 bis 30% des trockenen Bindemittels durch eine äquivalente Menge einer Zusammensetzung nach einem der Ansprüche 1 bis 4, oder durch die getrennt voneinander eingeführten Bestandteile dieser Zusammensetzung ersetzt ist.

## Claims

1. Amylaceous composition for mixtures based on synthetic or natural binding agents used in the manufacture of certain textile, para-textile products and particularly of the composite textile or fabric type, characterized by the fact that it comprises:

- from 7% to 45% by weight, preferably from 10 to 25% by weight of a starch swelling in cold water, if necessary modified chemically,
- from 55% to 93% by weight, preferably from 70 to 85% by weight of granular starch modified chemically.

2. Composition according to claim 1, characterized by the fact that there is added from 0.2 to 4%, preferably from 0.5 to 2.5% by weight, expressed in OH- equivalents with respect to the total starch of the composition, of at least one alkaline agent adapted to lower the gelatinisation temperature of the granular starch.

3. Composition according to claims 1 and 2, characterized by the fact that it is added from 0.1% to 10%, preferably from 0.2 to 5% by weight of borax.

4. Composition according to claims 1 to 3, characterized by the fact that it comprises granular starch modified by oxidation.

5. Mixtures based on synthetic or natural binding agents used in the manufacture of certain textile products, particularly of the composite textile type, characterized by the fact that a proportion of about 5% to 30% by weight of the dry binding agent is replaced by an equivalent amount of the amylaceous composition according to one of claims 1 to 4.

6. Process for the preparation of textile, para-textile products and particularly of the composite textile type, characterized by the fact that it comprises the employment of a mixture based on synthetic or natural binding agents in which a proportion of about 5 to about 30% of the dry binding agent is replaced by an equivalent amount of a composition according to one of claims 1 to 4 or by the constituents of the said composition introduced separately.